Europäisches Patentamt

(19) European Patent Office

Office européen des brevets

(11) Numéro de publication : **0 270 386 B1**

(12) **FASCICULE DE BREVET EUROPEEN**

(45) Date de publication du fascicule du brevet :
**10.04.91 Bulletin 91/15**

(51) Int. Cl.⁵ : **A21D 2/32, A21D 2/40**

(21) Numéro de dépôt : **87401178.6**

(22) Date de dépôt : **25.05.87**

(54) **Procédé de préparation d'un mélange pulvérulent de farine de blé et de lécithine.**

(30) Priorité : **26.11.86 EP 86402625**

(43) Date de publication de la demande :
**08.06.88 Bulletin 88/23**

(45) Mention de la délivrance du brevet :
**10.04.91 Bulletin 91/15**

(84) Etats contractants désignés :
**AT CH GR LI LU SE**

(56) Documents cités :
**DE-A- 2 253 515
DE-C- 535 587
FR-A- 846 021**

(56) Documents cités :
**FR-A- 940 357
FR-A- 1 382 300
FR-A- 2 590 448
US-A- 2 522 591**

(73) Titulaire : **Griveau, Jean**
**4, rue du Chemin Vieux Courton le Bas
F-77650 Longueville (FR)**

(72) Inventeur : **Griveau, Jean**
**4, rue du Chemin Vieux Courton le Bas
F-77650 Longueville (FR)**

(74) Mandataire : **Kügele, Bernhard et al
NOVAPAT-CABINET CHEREAU 63 bis,
boulevard Bessières
F-75017 Paris (FR)**

## Description

La présente invention a pour objet un procédé de préparation d'un mélange pulvérulent, ayant une granulométrie fine et homogène, de farine de blé et de lécithine.

Il est connu d'incorporer de la lécithine, à titre d'agent émulsifiant dans de la farine de blé, du type utilisé en boulangerie ou en biscuiterie, en vue d'améliorer l'aptitude à la dispersion et à l'humidification de la farine ainsi que les propriétés de fermentation de la pâte, et, également, de permettre l'obtention de produits de boulangerie ayant une croûte présentant un aspect particulièrement appétissant.

La proportion de lécithine à incorporer dans de la farine de blé, qui permet l'obtention des meilleurs résultats pour l'utilisation susmentionnée est de l'ordre de 17 à 18% en poids, par rapport au poids total du mélange de lécithine et de farine.

Conformément à l'art antérieur, du fait que la lécithine est sous forme d'un liquide ayant une viscosité relativement élevée à la température ambiante, on a trouvé commode de la porter à une température supérieure à la température ambiante, afin de diminuer sa viscosité et conférer à celle-ci une valeur appropriée au pompage de la lécithine liquide et à son transport dans des canalisations. En pratique, on a constaté que la température qui convient le mieux à cet effet est de l'ordre de 55°C.

Lorsque l'on mélange de la lécithine liquide, à la température ambiante ou à une température supérieure à la température ambiante, avec de la farine de blé standard ou étuvée dans les proportions susmentionnées, on obtient un produit granuleux contenant une importante proportion de grumeaux et dont la couleur est très variable. Ce problème est encore plus critique avec la farine étuvée.

Un tel produit n'est pas acceptable en boulangerie car, par tradition, les boulangers désirent n'utiliser que des matières premières fines et sans grumeaux et ayant une couleur régulière. En outre, ce produit ne se prêterait pas à être mélangé, à titre d'agent améliorant à de la farine panifiable car il ne présente pas une finesse suffisante.

On a cherché à remédier à l'inconvénient qui vient d'être mentionné en effectuant le mélange de la lécithine avec de la farine dans un mélangeur à turbine et en incorporant une certaine quantité d'un agent absorbant pulvérulent, tel que de la silice, dans la farine, le mélange de farine et de l'agent absorbant étant d'abord introduit dans le mélangeur et la lécithine chaude étant ensuite injectée dans ce dernier au moyen de gicleurs.

Cette manière de procéder n'est pas envisageable dans les pays où l'emploi d'agents absorbants tels que la silice est interdit par la législation relative aux produits alimentaires. C'est le cas, notamment en France.

L'invention a donc pour but de permettre l'obtention d'un mélange pulvérulent de farine de blé et de lécithine exempt de grumeaux et ayant une granulométrie fine et régulière, ce produit présentant en outre une coloration uniforme, sans utilisation d'additifs non autorisés par la législation, tels que des agents absorbants ou encore des solvants, ou des huiles végétales.

A cet effet, le procédé selon l'invention est caractérisé en ce que l'on mélange la lécithine et la farine dans un mélangeur à turbine, la farine étant d'abord introduite dans le mélangeur et la lécithine étant ensuite introduite par écoulement, en une seule opération, dans le mélangeur tout en étant maintenue à une température au plus égale +8°C.

De préférence, le temps d'introduction de la lécithine dans le mélangeur à turbine est au plus égal à 20 secondes.

Egalement, de préférence, après incorporation de la lécithine dans la farine, dans le mélangeur à turbine, on évacue le mélange ainsi obtenu en une seule opération d'une durée maximale de 30 secondes.

Avantageusement, on verse le mélange sortant du mélangeur dans une cuve de stockage intermédiaire où on le maintient au repos avant son transport ultérieur.

Conformément à un premier mode de mise en oeuvre du procédé, on porte la lécithine à une température comprise entre +5 et +8°C, par maintien dans ce domaine de température de récipients contenant la lécithine pendant un temps suffisant pour que la température de leur contenu soit amenée dans ce domaine.

Selon un deuxième mode de mise en oeuvre du procédé, on refroidit la lécithine en lui incorporant de l'anhydride carbonique à l'état de neige carbonique.

De préférence, conformément à ce deuxième mode de mise en oeuvre, la proportion de neige carbonique incorporée à la lécithine est telle que la lécithine soit portée à une température comprise dans le domaine de −10°C à −5°C.

Comme lécithine, on utilise de préférence de la lécithine provenant de soja, mais on pourrait, bien entendu, utiliser de la lécithine ayant une autre provenance, par exemple de la lécithine extraite d'oeufs d'oiseaux, tels que les gallinacés et les palmipèdes.

On va maintenant décrire plus en détail la mise en oeuvre du procédé selon l'invention au moyen de deux exemples illustrant celle-ci.

## EXEMPLE 1

(premier mode de mise en oeuvre)

On stocke la lécithine, contenue dans des fûts, dans une chambre froide, à une température comprise entre +5°C et +8°C, pendant une période suffisante (en pratique de l'ordre d'au moins 24 heures), pour amener la température du contenu des fûts dans ce domaine. Bien entendu, dans le cas où la température ambiante est comprise dans le domaine susmentionné, l'utilisation d'une chambre froide n'est pas nécessaire.

On bascule ensuite les fûts de lécithine de manière à vider leur contenu, dans une cuve de stockage d'où l'on prélève la lécithine par pompage et on la pousse vers un bac doseur correspondant à une unité de 180 kg, ce bac étant muni d'une vanne papillon alimentant un mélangeur à turbine, tel qu'un mélangeur à turbine de marque "MORITZ". Le diamètre d'ouverture de la vanne papillon du bac doseur est de 150 mm, de sorte que la durée requise pour l'introduction dans le mélangeur à turbine de l'intégralité de la quantité de lécithine contenue dans le bac doseur est légèrement inférieure à 20 secondes.

D'autre part, on introduit dans le mélangeur à turbine 820 kg de farine de blé panifiable, de type dit "55", au moyen d'un dispositif de transport pneumatique et d'une benne peseuse. On règle la vitesse de la turbine du mélangeur à environ 200 tours/minute et, lorsque cette vitesse est atteinte, on ouvre la vanne du bac doseur et on laisse s'écouler par gravité dans le mélangeur toute la quantité de lécithine contenue dans le bac doseur. Dès que l'écoument de la lécithine est terminé, on réduit la vitesse de la turbine, et on évacue le mélange de lécithine et de farine (dont le poids total est de 1000 kg) en le laissant s'écouler sous l'effet de la rotation de la turbine, au ralenti, par une vanne d'évacuation disposée à la partie inférieure du mélangeur, dans une cuve de stockage. L'ouverture de la vanne de sortie du mélangeur est réglée de façon que la durée d'écoulement de la totalité du mélange soit au maximum de 30 secondes. On obtient ainsi un produit semi-ouvré que l'on transporte par aspiration, à partir de la cuve de stockage intermédiaire, dans un conduit menant à un cyclone d'aspiration, vers une bluterie centrifuge (par exemple consistant en une bluterie de marque GATINEAU) munie de grilles de tamisage ayant une ouverture de 20/10 afin de réduire les quelques mottes de lécithine subsistant éventuellement dans ce produit. On reprend ensuite le produit sortant de la bluterie centrifuge par une vis d'Archimède oblique et on le dirige vers un mélangeur horizontal à spires contrariées (par exemple, un mélangeur de marque ROUSSELLE), qui sert de réserve sur un poste d'ensachage. Le produit final est ensaché après passage dans une bluterie de sécurité (par exemple, du type LECOQ) destinée à éliminer les déchets et corps étrangers. On obtient ainsi un mélange constitué uniquement de farine de blé et de lécithine, contenant 82% en poids de farine et 18% en poids de lécithine, sous forme d'une poudre fine et sans grumeaux, ayant une couleur jaunâtre uniforme. Le contrôle qualité est effectué sur tamis 1 mm pour lequel on place le maximum à 5% de refus.

## EXEMPLE 2

(Deuxième mode de mise en oeuvre)

On maintient de la lécithine liquide à 56°C dans une cuve de stockage ayant une capacité de plusieurs milliers de litres, munie d'un serpentin de chauffage à circulation d'eau chaude, et on envoie environ 185 Kg de lécithine, à cette température, au moyen de tuyaux et d'une pompe à engrenage, dans un pétrin malaxeur muni d'un conduit d'évacuation de gaz. On envoie également dans ce pétrin, de la neige carbonique à −70°C que l'on pulvérise au-dessus de la lécithine liquide, dans le pétrin, au moyen d'une pluralité d'injecteurs, de manière à mélanger intimement la neige carbonique avec la lécithine. On obtient ainsi en quelques minutes le refroidissement de la lécithine, jusqu'à une température comprise entre −5°C et −10°C. A cette température, la lécithine a une viscosité élevée et elle est en fait presque à l'état solide. On introduit la lécithine ainsi refroidie dans un bac doseur du même type et de même capacité que celui que l'on utilise selon le mode de mise en oeuvre décrit dans l'exemple 1, mais ayant un diamètre d'ouverture de vanne papillon de sortie de 200 mm au lieu de 150 mm, ce qui permet de maintenir la durée nécessaire pour l'évacuation par gravité de toute la quantité de lécithine contenue dans le bac doseur à une valeur légèrement inférieure à 20 secondes, en dépit du fait que la lécithine est plus visqueuse que dans le cas du mode opératoire de l'exemple 1. On procède ensuite aux opérations de mélange de lécithine et de farine de blé ainsi qu'aux opérations subséquentes, de la même manière que celle décrite dans l'exemple 1 et l'on obtient un résultat identique.

Il est à remarquer que les conditions spécifiées dans les exemples donnes ci-dessus concernant la température de la lécithine lors de son introduction dans le mélangeur à turbine ainsi que la durée d'écoulement de celle-ci du bac doseur dans le mélangeur à turbine, la vitesse de rotation de ce dernier, la durée d'évacuation du mélange de farine et de lécithine à sa sortie du mélangeur, ainsi que le temps de repos du produit semi-ouvré ainsi obtenu doivent être assez étroitement respectés afin d'assurer l'obtention d'un produit pulvérulent pratiquement exempt de grumeaux et ayant une couleur uniforme.

On a pu incorporer jusqu'à 20% de lécithine pour 80% de farine.

## Revendications

1. Procédé de préparation d'un mélange pulvérulent, ayant une granulométrie fine et homogène, de farine de blé et de lécithine au moyen d'un mélangeur à turbine, caractérisé en ce que l'on introduit d'abord la farine dans le mélangeur et l'on porte la turbine du mélangeur à la vitesse de mélange et en ce que l'on introduit ensuite la lécithine par écoulement en une seule opération, dans le mélangeur en la maintenant à une température au plus égale à +8°C.

2. Procédé selon la revendication 1, caractérisé en ce que l'on porte la lécithine à une température comprise entre +5°C et +8°C, par maintien de la lécithine, contenue dans des récipients, dans ce domaine de température pendant un temps suffisant pour amener sa température dans ce domaine.

3. Procédé selon la revendication 1, caractérisé en ce que l'on refroidit la lécithine en lui incorporant de l'anhydride carbonique, à l'état de neige carbonique.

4. Procédé selon la revendication 3, caractérisé en ce que la proportion de neige carbonique incorporée dans la lécithine est suffisante pour porter la lécithine à une température comprise dans le domaine de −10°C à −5°C.

5. Procédé selon l'une des revendications 1 à 4, caractérisé en ce que la lécithine est portée à une température comprise entre −10°C et +8°C.

6. Procédé selon l'une des revendications 1 à 5, caractérisé en ce que le temps d'écoulement de la lécithine dans le mélangeur à turbine est au plus égal à 20 secondes.

7. Procédé selon l'une des revendications 1 à 6, caractérisé en ce que l'on évacue le mélange de farine et de lécithine en une seule opération d'une durée maximale de 30 secondes après sa préparation dans le mélangeur à turbine.

8. Procédé selon l'une des revendications 1 à 7, caractérisé en ce que, après incorporation de la lécithine dans la farine, on verse le mélange ainsi obtenu dans une cuve de stockage intermédiaire où on le maintient au repos avant son transport ultérieur.

9. Procédé selon l'une des revendications 1 à 8, caractérisé en ce que les proportions de lécithine et de farine sont de 17 à 18% en poids de lécithine et 82 à 83% en poids de farine.

10. Procédé selon l'une des revendications 1 à 8, caractérisé en ce que l'on soumet le mélange de lécithine et de farine à au moins une opération de broyage et de tamissage afin d'éliminer les grumeaux éventuellement présents dans ce mélange.

11. Produit obtenu selon l'une quelconque des revendications 1 à 10 de procédé, caractérisé en ce que le mélange de lécithine et de farine admet au plus 5% de refus au tamis de 1 mm.


**Ansprüche**

1. Verfahren zur Herstellung eines pulverförmigen Gemisches aus Getreidemehl und Lecithin mit feiner und homogener Korngröße mittels eines Turbinenmischers, **dadurch gekennzeichnet,** daß zunächst das Mehl in den Mischer eingeleitet und die Turbine des Mischers auf die Mischgeschwindigkeit gebracht wird, und daß dann das Lecithin durch Ausgiessen in einem einzigen Vorgang in den Mischer eingebracht wird, wobei es auf einer Temperatur von höchsten +8°C gehalten wird.

2. Verfahren nach Anspruch 1, **dadurch gekennzeichnet,** daß das Lecithin dadurch auf eine Temperatur zwischen +5°C und +8°C gebracht wird, indem das Licithin enthalnde Behälter auf diesen Temperaturbereich während einer Zeit gehalten werden, die ausreicht, um seine Temperatur in diesen Bereich zu bringen.

3. Verfahren nach Anspruch 1, **dadurch gekennzeichnet,** daß das Lecithin dadurch gekühlt wird, daß Kohlensäureanhydrid im Trockeneiszustand eingebracht wird.

4. Verfahren nach Anspruch 3, **dadurch gekennzeichnet,** daß der Anteil von in das Lecithin eingebrachtem Trockeneis ausreicht, um das Lecithin auf eine Temperatur im Bereich von −10°C bis −5°C zu bringen.

5. Verfahren nach einem der Ansprüche 1 bis 4, **dadurch gekennzeichnet,** daß das Lecithin auf eine Temperatur von −10°C und +8°C gebracht wird.

6. Verfahren nach einem der Ansprüche 1 bis 5, **dadurch gekennzeichnet,** daß die Zeit zum Ausgiessen des Lecithins in den Turbinenmischer höchstens 20 Sekunden beträgt.

7. Verfahren nach einem der Ansprüche 1 bis 6, **dadurch gekennzeichnet,** daß das Gemisch aus Mehl und Lecithin in einem einzigen Vorgang während einer Dauer von maximal 30 Sekunden nach seiner Herstellung im Turbinenmischer entnommen wird.

8. Verfahren nach einem der Ansprüche 1 bis 7, **dadurch gekennzeichnet,** daß nach dem Einbringen des Lecithins in das Mehl das so erhaltene Gemisch in einen Zwischenlagerbehälter gegossen wird, wo es vor seinem späteren Transport im Ruhezustand gehalten wird.

9. Verfahren nach einem der Ansprüche 1 bis 8, **dadurch gekennzeichnet,** daß die Anteile von Lecithin und Mehl 17 bis 18 Gew.% Lecithin und 82 bis 83 Gew.% Mehl betragen.

10. Verfahren nach einem der Ansprüche 1 bis 8, **dadurch gekennzeichnet,** daß das Gemisch aus Lecithin und Mehl wenigstens einem Feinzerkleinerungs- und Siebvorgang unterworfen wird, um in dem Gemisch eventuell vorhandene Klumpen zu entfernen.

11. Verfahren nach einem der Ansprüche 1 bis 10, **dadurch gekennzeichnet,** daß bei dem Gemisch aus Lecithin und Mehl ein maximaler Rückstand von 5% bei einem 1 mm-Sieb zulässig ist.

## Claims

1. A process for making a pulverulent mixture showing a fine and homogeneous size grading from wheat flour and lecithin by means of a turbine mixer, characterized in that flour is first introduced into the mixer and the turbine speed is raised to the mixture's one and then, lecithin is introduced into the mixer through a one stage flow by keeping it at a temperature of at least +8°C.

2. The process of claim 1, characterized in that lecithin is raised to a temperature range of +5°C-+8°C, by keeping said lecithin, stored into containers, within said temperature range for a period sufficient to raise its temperature to this range.

3. The process of claim 1, characterized in that lecithin is cooled by incorporating carbon dioxide into it, as dry ice.

4. The process of claim 3, characterized in that the percentage of dry ice which is introduced into said lecithin is sufficient to raise the temperature thereof to temperature range of −10°C−5°C.

5. The process of claim 1-4, characterized in that said lecithin temperature is raised to the temperature range of −10°C-+8°C.

6. The process of one claim 1-5, characterized in that the lecithin flowing period through the turbine mixer is at most of 20 seconds.

7. The process of one claim 1-6, characterized in that the flour and lecithin mixture is discharged through a single step of a maximum length of 30 secondes after having been made in said turbine mixer.

8. The process of one claim 1-7, characterized in that, when introducing said lecithin into flour is completed, the obtained mixture is poured into an intermediate storage tank where it is allowed to stand before the next processing step thereof.

9. The process of claims 1-8, characterized in that the lecithin content is 17-18 weight percent and the flour content is 82-83 weight percent.

10. The process of any claim 1-8, characterized in that said lecithin and flour mixture is submitted to at least a kneading and screening step in order to remove any lump which possibly could remain in the mixture.

11. A product obtained according to any claim 1-10 of said process, characterized in that said lecithin and flour mixture contains at most 5% retainings with a 1 mm sieve.